# EUROPEAN PATENT APPLICATION

(11) **EP 4 632 831 A1**
(43) Date of publication of application: **15.10.2025**
(21) Application number: 24810238.6
(22) Date of filing: 11.05.2024
(51) Int. Cl.: H01M 4/13

(54) **ELECTRODE PIECE, PREPARATION METHOD THEREFOR, BATTERY CELL, BATTERY, AND ELECTRIC APPARATUS**

(30) Priority: 22.05.2023 CN 202310579307
(71) Applicant: Contemporary Amperex Technology Co., Limited, Ningde, Fujian 352100 (CN)
(72) Inventor: JI, Xing, Ningde, Fujian 352100 (CN); LI, Ting, Ningde, Fujian 352100 (CN)
(74) Representative: Ziebig Hengelhaupt Intellectual Property Attorneys Patentanwaltskanzlei PartGmbB
(86) International application number: PCT/CN2024/092676
(87) International publication number: WO 2024/239991

(57) **Abstract**

Embodiments of the present application provide an electrode piece, a preparation method therefor, a battery cell, a battery, and an electric apparatus, which belong to the technical field of batteries. The electrode piece includes a current collector, an active substance layer, a first insulating layer and a second insulating layer, where the current collector includes a main body part and a tab, the tab extends from a first end of the main body part, the first end is an end of the main body part in a first direction, the main body part includes a coating area and a transition area, and the transition area is arranged between the coating area and the tab; the active substance layer is arranged on a surface of the coating area; the first insulating layer is arranged on an end face of the main body part at the first end; and at least a part of the second insulating layer is arranged on a surface of the transition area, the second insulating layer includes a thermoplastic polymer and an organic binder, and the organic binder has a thermal decomposition temperature T≥400°C. The technical solution of the present application is useful for improving reliability of a battery cell.

## Description

### CROSS-REFERENCE TO RELATED APPLICATIONS

The present application claims priority to Patent Application No. 202310579307.0 entitled "Electrode piece, Preparation Method Therefor, Battery Cell, Battery, and Electric Apparatus" filed on May 22, 2023, which is incorporated herein by reference in its entirety.

### TECHNICAL FIELD

The present application relates to the technical field of batteries, and in particular, to an electrode piece, a preparation method therefor, a battery cell, a battery, and an electric apparatus.

### BACKGROUND

With increasing environmental pollution, new energy industries are receiving increasing attention. In new energy industries, battery technologies are an important factor for the development thereof.

In the development of battery technologies, various design factors, for example, energy density, cycle life, and reliability are taken into consideration. The design of an electrode piece in a battery cell is critical to the reliability of the battery cell. Therefore, how to provide the electrode piece to improve the reliability of the battery cell is an urgent technical problem to be solved.

### SUMMARY

The present application has been made in view of the above problem, and an objective thereof is to provide an electrode piece to improve the reliability of a battery cell.

To achieve the above objective, provided in the present application are an electrode piece, a preparation method therefor, a battery cell, a battery, and an electric apparatus.

In a first aspect, an electrode piece is provided. The electrode piece comprises a current collector, an active substance layer, a first insulating layer and a second insulating layer, wherein the current collector comprises a main body part and a tab, the tab extends from a first end of the main body part, the first end is an end of the main body part in a first direction, the main body part comprises a coating area and a transition area, and the transition area is arranged between the coating area and the tab; the active substance layer is arranged on a surface of the coating area; the first insulating layer is arranged on an end face of the main body part at the first end; and at least a part of the second insulating layer is arranged on a surface of the transition area, the second insulating layer comprises a thermoplastic polymer and an organic binder, and the organic binder has a thermal decomposition temperature T≥400°C.

An embodiment of the present application provides an electrode piece, wherein the electrode piece comprises a current collector, an active substance layer, a first insulating layer and a second insulating layer. The current collector comprises a main body part and a tab, the tab extends from a first end of the main body part, and the first end of the main body part is an end of the main body part in a first direction. The main body part comprises a coating area and a transition area, wherein the transition area is arranged between the coating area and the tab, and the coating area is arranged with an active substance layer. In this manner, the arrangement of the transition area allows a cutting tool to have a specific distance from the active substance layer in the process of cutting the tab, thereby reducing the falling of the active substance layer. The first insulating layer is arranged on an end face of the main body part at the first end, so that the first insulating layer can coat the end face of the first end, reducing the risk that the current collector at the end face is exposed or even contact the electrode with the opposite polarity. In addition, the first insulating layer can coat burrs generated by the cutting process, reducing the risk that the burrs contact the electrode with the opposite polarity. At least a part of the second insulating layer is arranged on a surface of the transition area, and the second insulating layer comprises a thermoplastic polymer and an organic binder. In this manner, the cutting line is located in the transition area, and during the process of cutting the tab, the thermoplastic polymer in the second insulating layer on the surface of the transition area changes from a solid state to a flowable state when heated, and the flowable thermoplastic polymer flows to the end face of the first end and solidifies at the end face after cooling. The arrangement of the organic binder allows the thermoplastic polymer in the second insulating layer to adhere to the surface of the current collector, reducing the risk of the second insulating layer falling off the current collector. Since substantial heat radiation is generated during the cutting process, by setting the thermal decomposition temperature T of the organic binder to be ≧400°C, the organic binder does not decompose during the cutting process, so that the second insulating layer can adhere to the surface of the current collector, and the risk of the falling of the second insulating layer can be reduced. Therefore, the technical solutions of the embodiments of the present application may improve the reliability of the battery cell.

**In a** possible implementation, the organic binder comprises at least one of a resin binder, a rubber binder, and a composite binder.

**In** a possible implementation, the resin binder comprises at least one of epoxy resin, polyimide, and another nitrogen-containing heterocyclic binder, and/or the rubber binder comprises organosilicon rubber, and/or the composite organic binder comprises at least one of phenolic aldehyde and modified phenolic aldehyde.

Since the organic binder described above has a high thermal decomposition temperature, the organic binder does not decompose during the cutting process of the current collector, so that the risk of the second insulating layer falling off the current collector can be reduced.

In a possible implementation, a dropping point of the thermoplastic polymer is 80°C to 200°C. In this manner, in the cutting process of the current collector arranged with the second insulating layer, the thermoplastic polymer changes from the solid state to the flowable state by the heat generated by the cutting, and the flowable thermoplastic polymer can flow to the exposed end face of the current collector after the cutting and to burrs generated by the cutting, thereby facilitating the preparation of the first insulating layer. Optionally, the dropping point of the thermoplastic polymer is 150°C to 200°C, thereby reducing the risk of the thermoplastic polymer changing to the flowable state due to other factors during a non-cutting process of the current collector.

In a possible implementation, the thermoplastic polymer comprises at least one of a crystalline thermoplastic polymer and an amorphous thermoplastic polymer. Optionally, the crystalline thermoplastic polymer comprises at least one of polyethylene, polypropylene, and polyamide. Optionally, the amorphous thermoplastic polymer comprises at least one of microcrystalline wax, polystyrene, and polymethyl methacrylate.

In the above technical solution, the use of the thermoplastic polymer facilitates the formation of a uniform and dense coating on both the exposed end face of the current collector and the burrs after cutting.

In a possible implementation, the second insulating layer further comprises an insulating inorganic material. Optionally, a volume particle diameter distribution Dv50 of the insulating inorganic material is 1 µm to 1.5 µm. Optionally, the insulating inorganic material comprises boehmite. In this manner, by adding the insulating inorganic material to the second insulating layer, the risk of shrinkage of the second insulating layer during the cutting process is effectively reduced. Further, by properly setting the particle diameter of the inorganic material, the shrinkage of the second insulating layer can be effectively blocked while achieving a more uniform second insulating layer.

In a possible implementation, a resistance R of the end face arranged with the first insulating layer satisfies R≥100 Ω. Optionally, the resistance R of the end face arranged with the first insulating layer satisfies R≥2000 Ω. The resistance at the end face satisfies the above condition, so that the risk of a short circuit in the battery cell caused by contact between the end face and the electrode with the opposite polarity can be reduced.

In a possible implementation, in the second insulating layer, the mass ratio A:B of the thermoplastic polymer to the organic binder is 60:40 to 80:20. Optionally, in the second insulating layer, the mass ratio A:B of the thermoplastic polymer to the organic binder is 70:30 to 80:20.

In the above technical solution, by properly setting the mass ratio of the thermoplastic polymer to the organic binder in the second insulating layer, the risk of the falling of the second insulating layer can be reduced. At the same time, the uniform and dense first insulating layer can be formed on the exposed end face of the current collector and the burrs.

In a possible implementation, the thickness d1 of the first insulating layer is 200 nm to 2000 nm. In this manner, the first insulating layer with a small thickness can coat the burrs and the exposed end face. Optionally, the thickness d1 of the first insulating layer is 200 nm to 500nm, so that the thickness of the first insulating layer can be further reduced while the burrs and the exposed end face can be well coated.

In a possible implementation, the thickness d2 of the second insulating layer is 20 µm to 50 µm. Optionally, the thickness d2 of the second insulating layer is 20 µm to 30µm.

In the above technical solution, in the case where the thickness d2 of the second insulating layer is not less than 20 µm, in the process of cutting the current collector arranged with the second insulating layer, a large amount of the thermoplastic polymer is contained in the second insulating layer, so that the large amount of the thermoplastic polymer can flow to the burrs and the exposed end face of the current collector when heated, which is advantageous to coating the exposed end face and the burrs uniformly and densely. **In** the case where the thickness d2 of the second insulating layer is not more than 50 µm, the energy consumed for cutting can be reduced and the first insulating layer with suitable thickness can be obtained. Optionally, when the thickness d2 of the second insulating layer is 20 µm to 30µm, the effect of coating the exposed end face and the burrs can be improved while reducing the energy consumed for cutting.

**In** a possible implementation, the second insulating layer comprises a first part and a second part, wherein the first part is arranged on the surface of the transition area, and the second part extends from the first part in the first direction and is arranged on a part of a surface of the tab. In this manner, the risk of the contact between the tab and the electrode with the opposite polarity can be reduced.

In a possible implementation, end faces of both ends of the area of the tab in which the second part is arranged are arranged with the first insulating layer in a second direction, and the second direction is different from the first direction. Optionally, the second direction is perpendicular to the first direction. In this manner, the first insulating layer can coat the exposed end face of the tab by the cutting, and the risk of the contact between the end face and the electrode with the opposite polarity can be reduced.

In a possible implementation, the material of the first insulating layer is the same as the material of the thermoplastic polymer in the second insulating layer. In this manner, preparation steps of the electrode piece can be simplified to accelerate the preparation speed.

In a possible implementation, the thermoplastic polymer in the first insulating layer is in the form of a film, and the thermoplastic polymer in the second insulating layer comprises a thermoplastic polymer in the form of a film and a thermoplastic polymer in the form of a particle. In this manner, the first insulating layer is formed after the thermoplastic polymer in the second insulating layer is melted and then solidified. In this manner, the preparation steps of the electrode piece can be simplified, and the first insulating layer can be formed at the same time as the cutting.

In a possible implementation, the current collector comprises a metal foil sheet or a composite current collector. Optionally, the metal foil sheet comprises an aluminum foil or a copper foil. Optionally, the composite current collector comprises a polymer substrate layer and a metal layer arranged on at least one surface of the polymer substrate layer. Optionally, the current collector comprises the aluminum foil. In this manner, it is easy to select an appropriate current collector according to practical needs. In the case where the current collector comprises the aluminum foil, the electrode piece is a positive electrode piece, which not only reduces the risk of contact between the positive electrode piece and a negative electrode piece but also enhances the reliability of the battery cell. In addition, this can reduce the risk of lithium dendrite bridging risks arising from the positive electrode piece and the negative electrode piece.

In a possible implementation, the first insulating layer is further arranged on an end face of the main body part at a second end, and the second end is opposite to the first end in the first direction. In this manner, the first insulating layer may be arranged both on the end face at the first end of the main body part and the end face at the second end of the main body part, so that the risk of short circuit of the battery cell may be further reduced.

According to a second aspect, a method for preparing an electrode piece is provided, including providing a current collector; coating a first area of the current collector with an active substance to form an active substance layer; coating a second area of the current collector with an insulating slurry to form a second insulating layer, wherein the insulating slurry comprises a thermoplastic polymer and an organic binder, and the organic binder has a thermal decomposition temperature T≥400°C; and cutting the current collector arranged with the second insulating layer along a cutting line, wherein at least a part of the cutting line is arranged in the second area.

In the above technical solution, by arranging the second insulating layer, the first insulating layer is formed simultaneously during cutting, which is advantageous to simplifying the preparation process of the first insulating layer. In addition, since the organic binder has a thermal decomposition temperature T≥400°C, the organic binder does not decompose during the cutting of the current collector, which is advantageous to reducing the risk that the second insulating layer falls off the current collector.

In a possible implementation, the organic binder comprises at least one of a resin binder, a rubber binder, and a composite binder. Optionally, the resin binder comprises at least one of epoxy resin, polyimide, and another nitrogen-containing heterocyclic binder; the rubber binder comprises organosilicon rubber; and the composite organic binder comprises at least one of phenolic aldehyde and modified phenolic aldehyde.

In a possible implementation, the thickness d2 of the second insulating layer is 20 µm to 50 µm. Optionally, the thickness d2 of the second insulating layer is 20 µm to 30µm.

In a possible implementation, a dropping point of the thermoplastic polymer is 80°C to 200°C. Optionally, a dropping point of the thermoplastic polymer is 150°C to 200°C.

In a possible implementation, the thermoplastic polymer comprises at least one of a crystalline thermoplastic polymer and an amorphous thermoplastic polymer. Optionally, the crystalline thermoplastic polymer comprises at least one of polyethylene, polypropylene, and polyamide. Optionally, the amorphous thermoplastic polymer comprises at least one of microcrystalline wax, polystyrene, and polymethyl methacrylate.

In a possible implementation, the insulating slurry further comprises an insulating inorganic material. Optionally, a volume particle diameter distribution Dv50 of the insulating inorganic material is 1 µm to 1.5 µm. Optionally, the insulating inorganic material comprises boehmite.

In a possible implementation, in the insulating slurry, the mass ratio A:B of the thermoplastic polymer to the organic binder is 60:40 to 80:20. Optionally, in the second insulating layer, the mass ratio A:B of the thermoplastic polymer to the organic binder is 70:30 to 80:20.

In a possible implementation, the cutting the current collector arranged with the second insulating layer along a cutting line comprises controlling a laser processing tool to cut the current collector arranged with the second insulating layer along the cutting line.

In the above technical solution, the current collector is cut by a laser, and more heat can be generated during the cutting process, so that the thermoplastic polymer in the second insulating layer can flow dynamically to the end face, thereby facilitating the formation of the first insulating layer.

According to a third aspect, a battery cell is provided, including the electrode piece according to the first aspect and any one of the possible implementations thereof, and/or the electrode piece prepared by using the method according to the second aspect and any one of the possible implementations thereof.

According to a fourth aspect, a battery is provided, including the battery cell according to the third aspect.

According to a fifth aspect, an electric apparatus is provided, including the battery according to the fourth aspect.

### DESCRIPTION OF DRAWINGS

In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work.
FIG. 1 is a schematic diagram of an electrode piece before tab processing according to an embodiment of the present application;
FIG. 2 is a schematic diagram of an electrode piece according to an embodiment of the present application;
FIG. 3 is a cross-section view in a direction A-A in FIG. 2;
FIG. 4 is a cross-section view in a direction B-B in FIG. 2;
FIG. 5 is a flowchart of an electrode piece preparation method according to an embodiment of the present application;
FIG. 6 is a schematic diagram of a current collector according to an embodiment of the present application;
7 is a schematic diagram of a current collector coated with an active substance layer according to an embodiment of the present application;
FIG. 8 is a schematic diagram of a current collector coated with a second insulating layer according to an embodiment of the present application;
FIG. 9 is a schematic diagram of a current collector with a cutting line shown according to an embodiment of the present application;
FIG. 10 is a schematic diagram of a battery cell according to an embodiment of the present application;
FIG. 11 is a schematic diagram of a battery according to an embodiment of the present application;
FIG. 12 is a schematic diagram of an electric apparatus according to an embodiment of the present application; and
FIG. 13 is a SEM diagram of an end face on which a first insulating layer is arranged according to an embodiment of the present application.

### Reference signs:

1: Electrode piece; 124: Cutting line; 10: Current collector; 11: active substance layer; 121: First insulating layer; 122: Second insulating layer; 101: Main body part; 102: Tab; 1011: Coating area; 1012: Transition area; 1011a: End face; 1221: First part; 1222: Second part.

### DESCRIPTION OF EMBODIMENTS

Embodiments of an electrode piece, a preparation method therefor, a battery cell, a battery, and an electric apparatus of the present application are described below in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

Unless otherwise specified, the terms "including" and "containing" as used herein are meant to be open. For example, the "including" and "containing" may mean that other components not listed may be included or contained.

In the present application, the term "and/or" is inclusive, unless specifically stated otherwise. For example, the phrase "A and/or B" means "A, B, or both A and B". More specifically, the condition "A and/or B" is satisfied by either A being true (or present) and B being false (or absent), A being false (or absent) and B being true (or present), or both A and B being true (or present).

In the development of battery technologies, various design factors, for example, energy density, cycle life, discharge capacity, charge/discharge rate, and reliability are taken into consideration. The design of an electrode piece in a battery cell is critical to the reliability of the battery cell. The electrode piece generally includes a current collector and an active substance layer and an insulating layer which are coated on different areas of the current collector. After the corresponding active substance layer and insulating layer are coated on the current collector, the current collector coated with the active substance layer and the insulating layer needs to be cut to obtain a tab. During the cutting process, dust and burrs are easily generated, and the burrs may cause the electrode piece to contact an electrode with opposite polarity, thereby causing a short circuit.

In some methods, the insulating layer coated on the current collector is arranged as a ceramic coating to reduce burrs generated during the cutting. However, this method can only reduce the number of burrs, and burrs are still present after the cutting, and the burrs may cause the electrode piece to contact the electrode with the opposite polarity, which has an adverse effect. In addition, an end face of the current collector is exposed after cutting, and the exposed end face has a risk of contacting the electrode with the opposite polarity, which may cause a short circuit of the battery cell. It is disadvantageous to improving the reliability of the battery.

In order to further improve the reliability of the battery cell, a specific area of the current collector is coated with the insulating layer. The insulating layer includes a thermoplastic polymer and an organic binder. Through the arrangement of the organic binder, the adhesion of the thermoplastic polymer to a surface of the current collector is facilitated. A cutting line is located in an area where the insulating layer is located. In the process of cutting the current collector to prepare the tab, the thermoplastic polymer in the insulating layer changes from a solid state to a fluid state when heated, flows to the end face of the current collector after the cutting, and solidifies at the end face after cooling to form a new insulating layer. The new insulating layer formed at the end face may coat both the burrs generated by the cutting and the exposed end face after the cutting. However, during the cutting process with a laser tool, a large amount of heat tends to be generated, resulting in decomposition of the organic binder. When the organic binder decomposes, the adhesive force between the thermoplastic polymer and the current collector becomes weak, the risk of the second insulating layer falling from the current collector increases, and when the area where the second insulating layer falls contacts the electrode with the opposite polarity, the risk of short circuiting increases, which is disadvantageous to improving the reliability of the battery cell.

In view of this, the present application provides an electrode piece. In the electrode piece, a specific area of the current collector is coated with an insulating layer, where the insulating layer includes a thermoplastic polymer and an organic binder, and the organic binder has a thermal decomposition temperature T≥400°C. In this way, the organic binder does not decompose during the process of cutting the current collector to prepare the tab, and the risk of the second insulating layer falling off the current collector can be reduced, so that the reliability of the battery cell can be improved.

### [Electrode piece]

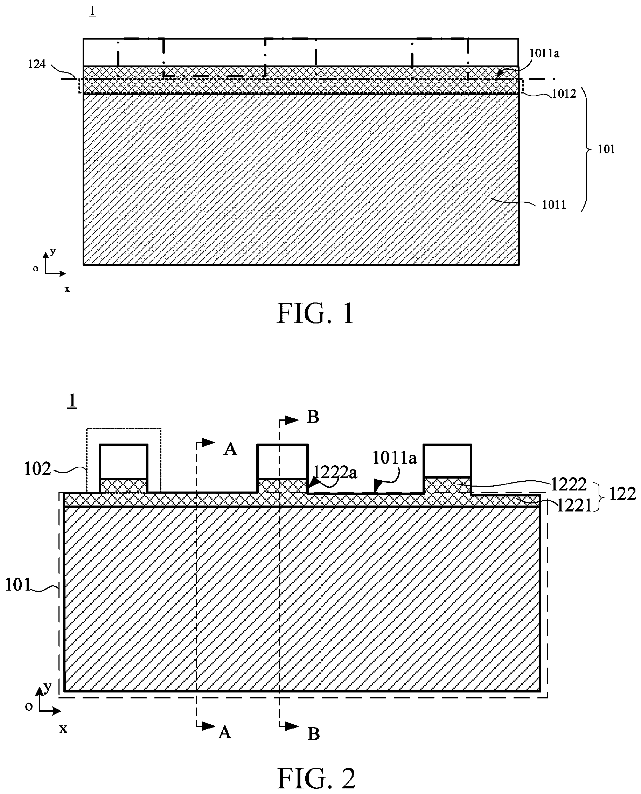

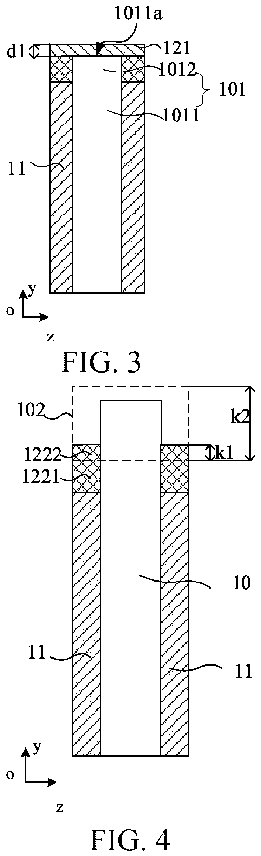

FIG. 1 is a schematic diagram of an electrode piece before tab processing according to an embodiment of the present application; FIG. 2 is a schematic diagram of an electrode piece according to an embodiment of the present application; FIG. 3 is a cross-section view in a direction A-A in FIG. 2; and FIG. 4 is a cross-section view in a direction B-B in FIG. 2.

Referring to FIG. 1 and FIG. 2, FIG. 1 is a schematic diagram of an electrode piece before tab processing; and FIG. 2 is a schematic diagram of an electrode piece. As shown in FIG. 1, a black dotted line 124 is a cutting line for cutting a tab, and after cutting along the cutting line 124, an electrode piece 1 shown in FIG. 2 is obtained.

Referring to FIG. 1 to FIG. 4, the electrode piece 1 includes a current collector 10, an active substance layer 11, a first insulating layer 121, and a second insulating layer 122.

The current collector 10 has two surfaces opposed in the thickness direction thereof, and the active substance layer 11 may be arranged on at least one of the two surfaces opposed in the thickness direction of the current collector 10. For example, as shown in FIG. 3 and FIG. 4, the current collector 10 is arranged with active substance layers 11 on both surfaces opposed in the thickness direction thereof.

The thickness direction of the current collector 10 may be the z-direction shown in FIG. 3 and FIG. 4.

The current collector 10 includes a main body part 101 and a tab 102, where the tab 102 extends from a first end of the main body part 101, and the first end of the main body part 101 is an end of the main body part 101 in a first direction.

The first direction is parallel to a plane in which the current collector 10 is located, and the first direction is a direction in which the tab 102 protrudes with respect to the main body part 101. For example, the first direction may be the y direction in FIG. 2.

The main body part 101 includes a coating area 1011 and a transition area 1012, and the transition area 1012 is arranged between the coating area 1011 and the tab 102.

The active substance layer 11 is arranged on the surface of the coating area 1011. For example, as shown in FIG. 3 and FIG. 4, the active substance layer 11 is arranged on both surfaces of the current collector 10 in the thickness direction. In some embodiments, the active substance layer 11 may be arranged on one of the two surfaces in the thickness direction of the current collector 10.

The first insulating layer 121 is arranged on an end face 1011a of the main body part 101 at the first end.

The end face 1011a of the main body part 101 at the first end is a face parallel to the thickness direction of the current collector 10. For example, as shown in FIG. 3, the end face 1011a is a surface parallel to the x direction and the z direction.

The end face 1011a of the main body part 101 at the first end may be formed by cutting along the cutting line 124 in the process of cutting the current collector 10 as shown in FIG. 1, and the end face 1011a is an end face of the transition area 1012 after cutting. After the cutting, the current collector 10 at the end face 1011a is exposed and burrs may be generated at the same time.

By arranging the first insulating layer 121 at the end face 1011a, the first insulating layer 121 can coat burrs generated during the cutting process, reducing the risk of the burrs contacting the electrode with the opposite polarity. For example, after the electrode piece 1 is wound or laminated with the electrode piece with the opposite polarity (for example, the electrode piece 1 is a positive electrode piece and the electrode piece with the opposite polarity is a negative electrode piece) to form an electrode assembly, and the electrode assembly is assembled with an end cap assembly and a case to form a battery cell, the burrs may contact the electrode piece with the opposite polarity. By arranging the first insulating layer 121, the first insulating layer 121 can coat the burrs, thereby reducing the risk of the burrs contacting the electrode with the opposite polarity.

By arranging the first insulating layer 121 at the end face 1011a, the first insulating layer 121 can coat the exposed end face 1011a of the current collector 10 after cutting, thereby reducing the risk of the end face 1011a contacting the electrode with the opposite polarity. For example, if the electrode piece 1 is a positive electrode piece, the arrangement of the first insulating layer 121 can reduce the risk that the electrode piece 1 contacts the negative electrode piece to cause an internal short circuit in the battery cell.

At least a part of the second insulating layer 122 is arranged on a surface of the transition area 1012. That is, the surface of the transition area 1012 is arranged with the second insulating layer 122, and the second insulating layer 122 may also be arranged on another area of the current collector 10 in addition to the transition area 1012. By arranging the second insulating layer 122 in the transition area 1012, the risk of the electrode piece 1 contacting an electrode piece 1 with the opposite polarity can be reduced.

The second insulating layer 122 includes a thermoplastic polymer and an organic binder. The arrangement of the organic binder in the second insulating layer 122 facilitates the adhesion of the thermoplastic polymer to the current collector 10, and can reduce the risk of the second insulating layer 122 falling off the current collector 10.

The thermoplastic polymer may refer to a polymer that softens when heated, solidifies when cooled, and can soften again. For example, when heated to a specific temperature, the thermoplastic polymer changes from a solid particle to a flowable state; and when cooled, the thermoplastic polymer may change to a thermoplastic polymer in the form of a layer or a film.

The thermoplastic polymer in the second insulating layer 122 changes from the solid state to the flowable state when heated to a specific condition, so that the flowable thermoplastic polymer can flow to the burrs and the exposed end face 1011a during the process of cutting the current collector 10 arranged with the second insulating layer 122. After the temperature is lowered, the flowable thermoplastic polymer solidifies at the burrs and the exposed end face 1011a to coat the burrs and the exposed end face 1011a, thereby reducing the risk of the burrs and the exposed end face 1011a contacting the electrode with the opposite polarity.

The organic binder has a thermal decomposition temperature T≥400°C. For example, the thermal decomposition temperature of the organic binder is 400°C, 500°C, 600°C. or more.

The thermal decomposition temperature refers to a temperature at which a compound is decomposed when heated. When reaching the thermal decomposition temperature, the organic binder undergoes decomposition, carbonization, and weight loss, thereby losing binding ability. The thermal decomposition temperature can be measured by a differential thermal analysis method, a thermal weight loss method, a thermo-mechanical curve analysis method, or the like.

By setting the thermal decomposition temperature T of the organic binder to be ≥400°C, the organic binder does not decompose during cutting of the current collector 10, which is advantageous to improving the adhesion between the second insulating layer 122 and the current collector 10, and reducing the risk of the second insulating layer 122 falling off the current collector 10.

An embodiment of the present application provides an electrode piece 1, where the electrode piece 1 includes a current collector 10, an active substance layer 11, a first insulating layer 121 and a second insulating layer 122. The current collector 10 includes a main body part 101 and a tab 102, where the tab 102 extends from a first end of the main body part 101, and the first end of the main body part 101 is an end of the main body part 101 in a first direction. The main body part 101 includes a coating area 1011 and a transition area 1012, and the transition area 1012 is arranged between the coating area 1011 and the tab 102. and the coating area 1011 is arranged with the active substance layer 11. In this manner, the arrangement of the transition area 1012 allows a cutting tool to have a specific distance from the active substance layer 11 in the process of cutting the tab 102, thereby reducing the falling of the active substance layer 11. The first insulating layer 121 is arranged on the end face 1011a of the main body part 101 at the first end, so that the first insulating layer 121 can coat the end face 1011a at the first end, reducing the risk of exposing the current collector at the end face 1011a, thereby reducing the risk of the exposed current collector 10 at the end face 1011a contacting an electrode with the opposite polarity. In addition, the first insulating layer 121 can coat burrs generated by the cutting process, reducing the risk that the burrs contact the electrode with the opposite polarity. At least a part of the second insulating layer 122 is arranged on a surface of the transition area 1012, and the second insulating layer 122 includes a thermoplastic polymer and an organic binder. In this manner, the cutting line is located in the transition area 1012, and during the process of cutting the tab 102, the thermoplastic polymer in the second insulating layer 122 on the surface of the transition area 1012 changes from a solid state to a flowable state when heated, and the flowable thermoplastic polymer flows to the end face 1011a of the first end and solidifies at the end face 1011a after cooling. The arrangement of the organic binder allows the thermoplastic polymer in the second insulating layer 122 to adhere to the surface of the current collector 10, reducing the risk of the second insulating layer 122 falling off the current collector 10. Since substantial heat radiation is generated during the cutting process, by setting the thermal decomposition temperature T of the organic binder to be ≥400°C, the organic binder does not decompose during the cutting process, so that the second insulating layer 122 can adhere to the surface of the current collector 10, and the risk of the falling of the second insulating layer 122 can be reduced. Therefore, the technical solution of the embodiment of the present application can reduce the risk of the second insulating layer 122 falling off the current collector 10, thereby reducing the risk of a short circuit or the like caused by the contact between the electrode piece 1 and the electrode with the opposite polarity due to the falling of the second insulating layer 122, thereby further improving the reliability of the battery cell.

In some embodiments, the organic binder includes at least one of a resin binder, a rubber binder, and a composite binder.

In some embodiments, the resin binder includes at least one of epoxy resin, polyimide, and another nitrogen-containing heterocyclic binder, and/or the rubber binder includes organosilicon rubber, and/or the composite organic binder includes at least one of phenolic aldehyde and modified phenolic aldehyde.

The composite binder may include a resin-rubber composite binder. The modified phenolic aldehyde may include polyamide-modified phenolic aldehyde and the like.

The another nitrogen-containing heterocyclic organic binder may include a nitrogen-containing cyclodextrin organic binder.

The polyimide may refer to a type of polymer having imide rings in the backbone. For example, the polyimide can be classified into three types of aliphatic, semi-aromatic and aromatic polyimide based on a chemical structure of a repeating unit.

The thermal decomposition temperature of the organic binder is related to the molecular weight thereof. In general, for binders of the same name, different molecular weights may result in binders having different thermal decomposition temperatures.

In this embodiment, the organic binder has a high decomposition temperature, and the organic binder does not decompose when more heat is generated by cutting the current collector 10.

In some embodiments, a dropping point of the thermoplastic polymer is 80°C to 200°C. For example, the dropping point of the thermoplastic polymer may be 80°C, 100°C, 150°C, 200°C, or any value within the above range.

The dropping point of the thermoplastic polymer is not lower than 80°C, so that the risk of melting or flowing of the thermoplastic polymer due to heating of the electrode piece 1 during other processing can be reduced. The dropping point of the thermoplastic polymer is not more than 200°C, so that the risk that the thermoplastic polymer does not turn into a flow state during the cutting process can be reduced, thereby reducing the risk that the first insulating layer 121 cannot be formed at the end face 1011a.

The dropping point of the thermoplastic polymer is a temperature at which the thermoplastic polymer transitions from a solid or semi-solid state to a liquid state.

In the cutting process of the current collector 10 arranged with the second insulating layer 122, the thermoplastic polymer changes from the solid state to the flowable state by the heat generated by the cutting, and the flowable thermoplastic polymer can flow to the exposed end face 1011a of the current collector 10 after the cutting and to burrs generated by the cutting, thereby facilitating the preparation of the first insulating layer 121.

Optionally, the dropping point of the thermoplastic polymer is 150°C to 200°C, thereby reducing the risk of the thermoplastic polymer changing to the flowable state due to other factors during a non-cutting process of the current collector 10.

In some embodiments, the material of the thermoplastic polymer includes at least one of a crystalline thermoplastic polymer and an amorphous thermoplastic polymer. Optionally, the crystalline thermoplastic polymer includes at least one of polyethylene, polypropylene, and polyamide. Optionally, the amorphous thermoplastic polymer includes at least one of microcrystalline wax, polystyrene, and polymethyl methacrylate.

The dropping point of the crystalline thermoplastic polymer may refer to the melting point of the crystalline thermoplastic polymer. The dropping point of the amorphous thermoplastic polymer may refer to the glass transition temperature of the amorphous thermoplastic polymer.

In the above technical solution, the use of the thermoplastic polymer facilitates the formation of a uniform and dense coating on both the exposed end face 1011a of the current collector 10 and the burrs after cutting. In addition, the thermoplastic polymer has a high insulation property and a pressure-resistant property, and when the electrode piece 1 is immersed in an electrolyte, the thermoplastic polymer does not undergo electrochemical reactions with the electrolyte.

In some embodiments, a resistance R of the end face 1011a arranged with the first insulating layer 121 satisfies R≥100 Ω. For example, R is 100 Ω, 500 Ω, or 1000 Ω.

In the case where the resistance of the end face 1011a is greater than 100 Ω, even if the end face 1011a contacts the electrode with the opposite polarity in some extreme cases, since the end face 1011a has a specific resistance, an internal short circuit does not occur in the battery cell, so that the risk of fire, even explosion, or the like due to the internal short circuit can be reduced.

Optionally, the resistance R of the end face 1011a arranged with the first insulating layer 121 satisfies R≥2000 Ω. For example, R is 2000 Ω, 5000 Ω, or infinity. In this manner, the risk of the internal short circuit of the battery cell can be further reduced.

In some embodiments, the second insulating layer 122 further includes an insulating inorganic material. The inorganic material has a high temperature resistance, and the ceramic material does not melt during the cutting of the current collector 10, so that the inorganic material can block the flowing thermoplastic polymer from moving away from the cutting line, thereby reducing the risk of shrinkage of the second insulating layer 122 in an area away from the cutting line. In addition, the weight of the inorganic material is larger than the weight of the thermoplastic polymer, and the flowing thermoplastic polymer exhibits limited ability to induce the movement of the inorganic material under the heat generated by the cutting, thereby preventing the shrinkage of the second insulating layer 122. In addition, the insulating inorganic material is capable of providing the second insulating layer 122 with a specific insulating property.

The insulating inorganic material may include at least one of boehmite, aluminum oxide, and silicon oxide. The embodiments of the present application include, but are not limited to thereto.

Optionally, a volume particle diameter distribution Dv50 of the insulating inorganic material is 1 µm to 1.5 µm. For example, the volume particle diameter distribution may be 1 µm, 1.2 µm, 1.5 µm, or any value within the above range.

By properly setting the particle size of the inorganic material, it is advantageous to blocking the shrinkage of the second insulating layer, and furthermore, it is advantageous to obtaining a more uniform slurry of the second insulating layer 122, and thus it is advantageous to obtaining a more uniform second insulating layer 122.

Optionally, the insulating inorganic material includes boehmite.

In some embodiments, in the second insulating layer 122, the mass ratio A:B of the thermoplastic polymer to the organic binder is 60:40 to 80:20. For example, A:B may be 60:40, 70:30, 75:25, 80:20, or any value within the above range.

In the above technical solution, by properly setting the mass ratio of the thermoplastic polymer to the organic binder in the second insulating layer 122, the risk of the falling of the second insulating layer 122 can be reduced. At the same time, the uniform and dense first insulating layer 121 can be formed on the exposed end face 1011a of the current collector 10 and the burrs.

Optionally, in the second insulating layer 122, the mass ratio A:B of the thermoplastic polymer to the organic binder is 70:30 to 80:20.

In some embodiments, the thickness d1 of the first insulating layer 121 is 200 nm to 2000 nm. For example, d1 may be 200 nm, 300 nm, 400 nm, 500 nm, 800 nm, 1000 nm, 1500 nm, 2000 nm, or any value within the above range.

The smaller the thickness d1 of the first insulating layer 121, the smaller space occupied by the electrode piece 1, so that the volumetric energy density of the battery cell can be improved. By setting the thickness d1 of the first insulating layer 121 to 200 nm to 2000 nm, the first insulating layer 121 with a small thickness can well coat the burrs and the exposed end face 1011a, thereby further improving the performance of the battery cell.

The thickness d1 of the first insulating layer 121 is an average thickness of the first insulating layer 121 in the first direction. For example, the thickness d1 is the average value of the maximum thickness and the minimum thickness in the first direction.

The thickness d1 of the first insulating layer 121 can be measured by photographing the end face 1011a of the electrode piece 1 with a scanning electron microscope (SEM) and measuring the thickness d1 of the first insulating layer 121 based on the obtained picture.

Optionally, the thickness d1 of the first insulating layer 121 is 200 nm to 500 nm. In this manner, the thickness of the first insulating layer 121 can be further reduced while the burrs and the exposed end face 1011a can be well coated.

In some embodiments, the thickness d2 of the second insulating layer 122 is 20 µm to 50 µm. For example, d2 may be 20 µm, 25 µm, 30 µm, 40 µm, 45 µm, 50 µm, or any value within the above range.

The thickness d2 of the second insulating layer 122 refers to the thickness of a surface on one side of the current collector 10. In the electrode piece 1, the total thickness of the second insulating layer 122 is 40 µm to 100 µm in the thickness direction of the electrode piece 1.

The thickness d2 of the second insulating layer 122 is an average thickness of the second insulating layer 122 in the thickness direction of the current collector 10. For example, the thickness d2 is the average value of the maximum thickness and the minimum thickness in the first direction.

In the case where the thickness d2 of the second insulating layer 122 is not less than 20 µm, in the process of cutting the current collector 10 arranged with the second insulating layer 122, a large amount of the thermoplastic polymer is contained in the second insulating layer 122, so that the large amount of the thermoplastic polymer can flow to the burrs and the exposed end face 1011a of the current collector 10 when heated, which is advantageous to coating the exposed end face 1011a and the burrs uniformly and densely.

In the case where the thickness d2 of the second insulating layer 122 is not more than 50 µm, the energy consumed for cutting can be reduced and the first insulating layer 121 with suitable thickness can be obtained.

Optionally, when the thickness d2 of the second insulating layer 122 is 20 µm to 30 µm, the effect of coating the exposed end face 1011a and the burrs can be improved while reducing the energy consumed for cutting.

The thickness d2 of the second insulating layer 122 can be measured by photographing the electrode piece 1 with the scanning electron microscope (SEM) in the thickness direction of the electrode piece 1 and measuring the thickness d2 of the second insulating layer 122 based on the obtained picture.

In some embodiments, the second insulating layer 122 includes a first part 1221 and a second part 1222, where the first part 1221 is arranged on a surface of the transition area 1012 and the second part 1222 extends from the first part 1221 and is arranged on a part of a surface of the tab 102. In this manner, the risk of the contact between the tab 102 and the electrode with the opposite polarity can be reduced. In addition, by setting a first thermoplastic polymer and a second thermoplastic polymer, it is also possible to reduce the risk that the second part 1222 of the second insulating layer 122 shrinks in a direction away from the cutting line 124.

A part of the tab 102 is arranged with the second part 1222 of the second insulating layer 122, and the other areas are not arranged with the second part 1222. In this way, the tab 102 can be easily weld and subsequent use of the battery cell can be facilitated.

In some embodiments, end faces 1222a of both ends of the area of the tab 102 in which the second part 1222 is arranged are arranged with the first insulating layer 121 in a second direction that is different from the first direction.

In the case where the electrode piece 1 includes a plurality of tabs 102, the second direction may be an arrangement direction of the plurality of tabs 102. For example, as shown in FIG. 2, the second direction is the x direction.

In the process of cutting the current collector 10 along the cutting line 124 to prepare the tab 102, a cutting tool passes through the area of the second part 1222. After cutting, the end face 1222a in the second direction of the area is exposed. By arranging the first insulating layer 121 at the end face 1222a, the risk of the end face 1222a contacting the electrode with the opposite polarity can be reduced.

The first insulating layer 121 arranged on the end faces 1222a at both ends of the area of the second part 1222 is formed in the process of cutting the current collector 10.

Optionally, the second direction is perpendicular to the first direction. In this manner, the cutting of the tab 102 is facilitated.

In some embodiments, the material of the first insulating layer 121 is the same as the material of the thermoplastic polymer in the second insulating layer 122. In other words, the material of the first insulating layer 121 has the same type as the material of the thermoplastic polymer in the second insulating layer 122. In this manner, the first insulating layer 121 can be prepared in the process of cutting the tab 102, so that preparation steps of the electrode piece 1 can be simplified to accelerate production.

In some embodiments, the thermoplastic polymer in the first insulating layer 121 is in the form of a film, and the thermoplastic polymer in the second insulating layer 122 includes a thermoplastic polymer in the form of a film and a thermoplastic polymer in the form of a particle. In this manner, the first insulating layer 121 is formed after the thermoplastic polymer in the second insulating layer 122 is melted and then solidified. After being flowable, the thermoplastic polymer in the second insulating layer 122 flows to the end face 1011a, and solidifies at the end face 1011a to form the first insulating layer 121. In this manner, the preparation steps of the electrode piece 1 can be simplified, and the first insulating layer 121 can be formed at the same time as the preparation of the tab 102 by cutting.

In the second insulating layer 122, at least a part of the thermoplastic polymer in the form of the particle remains, and in the first insulating layer 121, the thermoplastic polymer is in the form of the film and exhibits almost no particle shape.

The thermoplastic polymer in the form of the particle have a variety of shapes, such as a spherical shape, a rod-like shape, and a lamellar shape. Here, the thermoplastic polymer in the form of the particle means that the thermoplastic polymer is not in a flowable state and the thermoplastic polymer is solid.

Before the second insulating layer 122 is cut, the thermoplastic polymer in the second insulating layer 122 is in the form of the particle. During cutting of the second insulating layer 122, a part of the thermoplastic polymer in the second insulating layer 122 changes from a solid state to a flowable state (for example, a part of the thermoplastic polymer near the cutting line 124 changes to a flowable state), and another part of the thermoplastic polymer remains as a solid particle.

In some embodiments, the current collector 10 includes a metal foil sheet or a composite current collector. In this manner, it is easy to arrange the material of the current collector 10 according to actual needs.

Optionally, the metal foil sheet includes an aluminum foil or a copper foil.

Optionally, the composite current collector includes a polymer material base layer and a metal layer located on at least one surface of the polymer material base layer.

Optionally, the current collector includes the aluminum foil. In this manner, the electrode piece 1 is a positive electrode piece, which not only reduces the risk of contact between the positive electrode piece and a negative electrode piece but also enhances the reliability of the battery cell. In addition, this can reduce the risk of lithium dendrite bridging risks arising from the positive electrode piece and the negative electrode piece.

In some embodiments, the first insulating layer 121 is further arranged on an end face of the main body part 101 at a second end, and the second end is opposite to the first end in the first direction.

The main body part 101 has opposite ends in the first direction, where the ends are the first end and the second end respectively. The tab 102 protrudes from the main body part 101 at the first end, and the second end is opposite to the first end in the first direction.

The end face at the second end and the end face at the first end of the main body part 101 are arranged with the first insulating layer 121, so that it is advantageous to reducing the risk of an internal short circuit occurring in the battery cell due to both the end face at the first end and the end face at the second end contacting the electrode with the opposite polarity, thereby further improving the reliability of the battery cell.

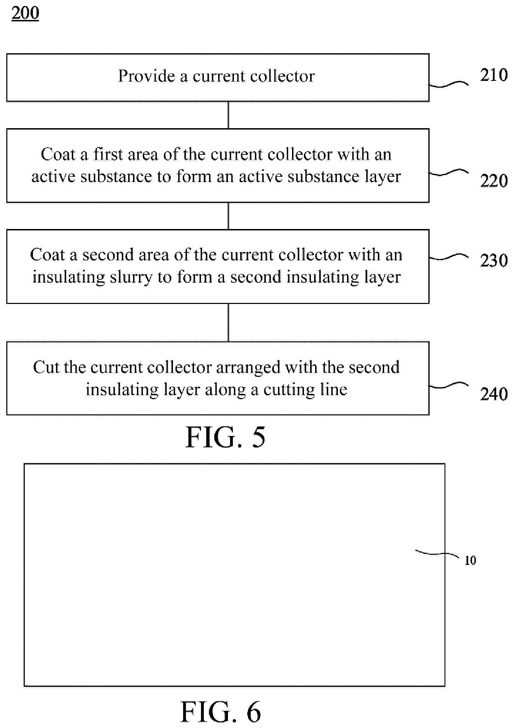

The technical solutions of the electrode piece are described above with reference to FIG. 1 to FIG. 4. The electrode piece preparation method is described below with reference to FIG. 5, where reference may be made to parts corresponding to the electrode piece described above, and details are not described here again.

### [Electrode piece preparation method]

FIG. 5 is a flowchart of an electrode piece preparation method according to an embodiment of the present application. A method 200 may be used to prepare the electrode piece 1 in the embodiments described above. The method 200 includes the following steps.

Step 210: providing a current collector 10.

FIG. 6 is a schematic diagram of a current collector according to an embodiment of the present application. For example, as shown in FIG. 6, the shape of the current collector 10 is a sheet or a rectangle. The shape and size of the current collector 10 may be set according to practical needs, and the embodiments of the present application include but are not limited thereto.

Step 220: coating a first area of the current collector 10 with an active substance to form an active substance layer 11.

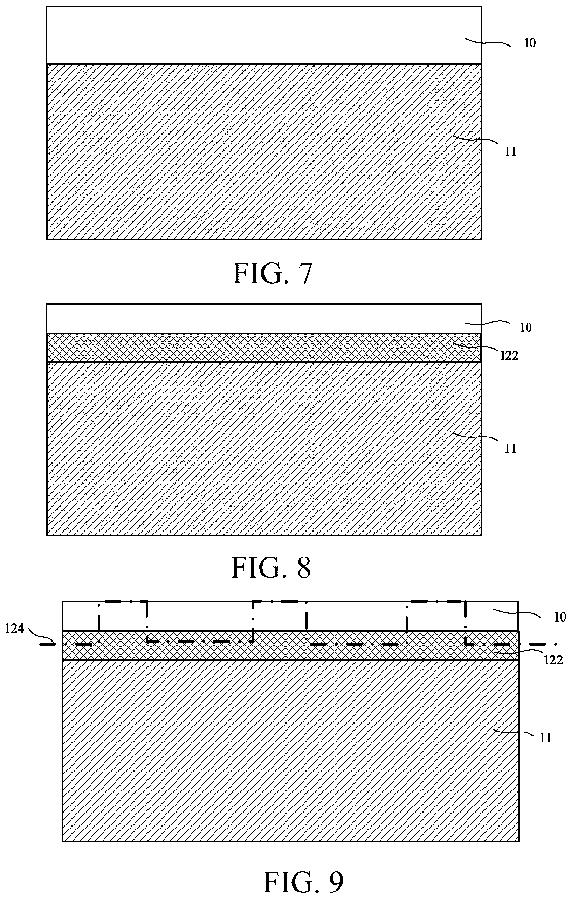

FIG. 7 is a schematic diagram of a current collector coated with an active substance layer according to an embodiment of the present application. As shown in FIG. 7, the first area of the current collector 10 is coated with the active substance to obtain a current collector 10 arranged with the active substance layer 11.

The first area of the current collector 10 may be an area arranged according to practical needs. In the embodiment of the present application, the first area corresponds to a coating area 1011 of a main body part 101 of the electrode piece 1.

Step 230: coating a second area of the current collector 10 with an insulating slurry to form a second insulating layer 122.

The insulating slurry includes a thermoplastic polymer and an organic binder, and the organic binder has a thermal decomposition temperature T≥400°C.

FIG. 8 is a schematic diagram of a current collector coated with a second insulating layer according to an embodiment of the present application. As shown in FIG. 8, the second area of the current collector 10 is coated with the insulating slurry to obtain the current collector 10 arranged with the second insulating layer 122.

The size of the second area may be set according to practical needs. In the embodiment of the present application, the second area corresponds to a transition area 1012 of the main body part 101 of the electrode piece 1 and an area of the tab 102 in which the second insulating layer 122 is arranged.

Step 240: cutting the current collector 10 arranged with the second insulating layer 122 along a cutting line 124, where at least a part of the cutting line 124 is arranged in the second area.

FIG. 9 is a schematic diagram of a current collector with a cutting line shown according to an embodiment of the present application. As shown in FIG. 9, the current collector 10 is cut along a cutting line 124 to obtain the electrode piece 1 shown in FIG. 2 to FIG. 4.

**In** the above technical solution, by arranging the second insulating layer 122, the first insulating layer 121 is formed simultaneously during cutting, which is advantageous to simplifying the preparation steps of the first insulating layer 121. Since the organic binder has a thermal decomposition temperature T≥400°C, the organic binder does not decompose during the cutting of the current collector 10 to prepare the tab 102, which is advantageous to reducing the risk of the falling of the second insulating layer 122. The electrode piece 1 prepared by using the above method is applied to a battery cell, so that the battery cell can have high reliability.

**In** some embodiments, the organic binder includes at least one of a resin binder, a rubber binder, and a composite binder. Optionally, the resin binder includes at least one of epoxy resin, polyimide, and another nitrogen-containing heterocyclic binder; the rubber binder includes organosilicon rubber; and the composite binder includes at least one of phenolic aldehyde and modified phenolic aldehyde.

**In** some embodiments, the thickness d2 of the second insulating layer 122 is 20 µm to 50 µm. Optionally, d2 may be 20 µm to 30 µm.

**In** some embodiments, a dropping point of the thermoplastic polymer is 80°C to 200°C. Optionally, the dropping point of the thermoplastic polymer is 150°C to 200°C.

**In** some embodiments, the material of the thermoplastic polymer includes at least one of a crystalline thermoplastic polymer and an amorphous thermoplastic polymer. Optionally, the crystalline thermoplastic polymer includes at least one of polyethylene, polypropylene, and polyamide. Optionally, the amorphous thermoplastic polymer includes at least one of microcrystalline wax, polystyrene, and polymethyl methacrylate.

**In** some embodiments, the insulating slurry further includes an insulating inorganic material. Optionally, a volume particle diameter distribution Dv50 of the insulating inorganic material is 1 µm to 1.5 µm. Optionally, the insulating inorganic material includes boehmite.

**In** some embodiments, in the insulating slurry, the mass ratio A:B of the thermoplastic polymer to the organic binder is 60:40 to 80:20. Optionally, in the second insulating layer 122, the mass ratio A:B of the thermoplastic polymer to the organic binder is 70:30 to 80:20.

**In** some embodiments, step 240 includes: controlling a laser processing tool to cut the current collector 10 arranged with the second insulating layer 122 along the cutting line.

For example, the power of the laser processing tool is 200 W, the frequency is 200 kHz, and the feed speed is 20 m/min. Specific use parameters of the laser processing tool may be specifically set based on the type of the organic binder. For example, in the case where the thermal decomposition temperature of the organic binder is low, a smaller feed speed and power may be set; and in the case where the thermal decomposition temperature of the organic binder is high, a larger feed speed and power may be set.

In the above technical solution, cutting by using the laser processing tool is advantageous to obtaining a relatively uniform and dense first insulating layer 121, and the number of the burrs generated during the cutting process are reduced, so that the risk of the falling of the second insulating layer 122 is reduced.

### [Anode plate]

The electrode piece 1 in the embodiment of the present application may be a positive electrode piece. The positive electrode piece includes a positive electrode current collector and a positive electrode film arranged on a surface of the positive electrode current collector.

The positive electrode current collector may be a metal foil sheet or a composite current collector. For example, the positive electrode current collector may be an aluminum foil.

The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

The positive electrode film includes a positive electrode active substance. The positive electrode active substance may use a positive electrode active substance for a battery known in the art. For example, the positive electrode active substance is lithium iron phosphate, a ternary material, a lithium-rich manganese-based material, or the like. As an example, the positive electrode active substance is a ternary material, further a high nickel system ternary material. For example, the positive electrode active substance may be LiNi_{0.6}Co_{0.2}Mn_{0.2}O₂, or LiNi_{0.8}Co_{0.1}Mn_{0.1}O₂.

The positive electrode film may optionally include the organic binder. As an example, the organic binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

The positive electrode film may optionally include a conductive agent. The conductive agent may be selected from at least one of superconducting carbon, acetylene black, carbon black, Ketjen black, carbon dots, carbon nanotubes, graphene, and carbon nanofibers.

### [Cathode plate]

The electrode piece 1 in the embodiment of the present application may be a negative electrode piece. The negative electrode piece includes a negative electrode current collector and a negative electrode film arranged on the negative electrode current collector.

The negative electrode current collector may be a metal foil sheet or a composite current collector. The negative electrode current collector may be a copper foil. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

The negative electrode film includes a negative electrode active substance. The negative electrode active substance may use a negative electrode active substance for a battery known in the art. As an example, the negative electrode active substance may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative electrode active substance of a battery may also be used. These negative electrode active substances may be used alone or in combination of two or more thereof.

The negative electrode film may optionally include a conductive agent. The conductive agent may be selected from at least one of superconducting carbon, acetylene black, carbon black, Ketjen black, carbon dots, carbon nanotubes, graphene, and carbon nanofibers.

### [Electrolyte]

The electrolyte functions to conduct ions between the positive electrode tab and the negative electrode tab. The type of the electrolyte is not specifically limited in the embodiments of the present application, and may be selected according to a requirement. For example, the electrolyte may be liquid, gelled or all solid.

In some embodiments, the electrolyte is an electrolyte solution. The electrolyte solution includes an electrolyte salt and a solvent.

The electrolyte salt may include at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

The solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, ethyl methyl sulfone, and diethyl sulfone.

The electrolyte may optionally include a negative electrode film-forming additive, a positive electrode film-forming additive, and may further include an additive capable of improving specific performance of the battery, for example, an additive improving overcharge performance of the battery, an additive improving high-temperature or low-temperature performance of the battery, and the like.

### [Separator]

The separator is used to separate the positive electrode piece from the negative electrode piece. The type of the separator is not particularly limited in the embodiments of the present application, and any known porous separator having good chemical stability and mechanical stability may be used.

The material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

The positive electrode piece, the negative electrode piece, and the separator may be formed into an electrode assembly through a winding process or a lamination process.

### [Battery cell]

An embodiment of the present application provides a battery cell, which includes the electrode piece 1 in the above embodiments and/or the electrode piece prepared by using the method in the above embodiments.

The shape of the battery cell is not particularly limited in the embodiments of the present application, and may be a cylindrical shape, a square shape, or any other shape. The battery cell may be a lithium ion battery, a lithium sulfur battery, a sodium ion battery, a magnesium ion battery, or the like.

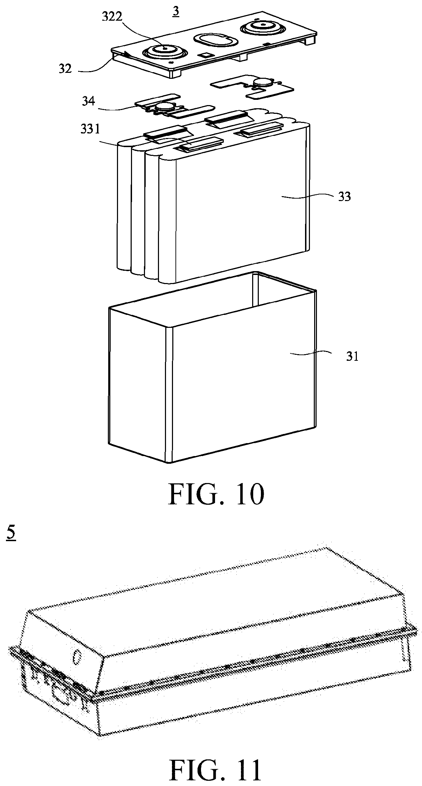

FIG. 10 is a schematic diagram of a battery cell according to an embodiment of the present application. For example, as shown in FIG. 10, a battery cell 3 is a square battery cell. The battery cell 3 includes a case 31, an end cap assembly 32, and an electrode assembly 33 arranged in the case 31.

The positive electrode piece, the negative electrode piece, and the separator may be formed into the electrode assembly 33 through a winding process or a lamination process. In some embodiments, the positive electrode piece is the electrode piece 1 in the embodiments of the present application.

The end cap assembly 32 includes an electrode terminal 322. For example, as shown in FIG. 10, the end cap assembly 32 includes two electrode terminals 322, one of which is a positive electrode terminal and one of which is a negative electrode terminal.

The battery cell 3 further includes a current collecting member 34, and the current collecting member 34 is configured to connect a tab portion 331 of the electrode assembly 33 and the electrode terminal 322. For example, when the electrode piece 1 according to the embodiment of the present application is a positive electrode piece, one current collecting member 34 is configured to connect the positive electrode tab portion (which may be the tab 102 of the electrode piece 1) and the positive electrode terminal, and the other current collecting member 34 is configured to connect the negative electrode tab portion and the negative electrode terminal.

In some embodiments, the battery cell may be assembled into a battery module, there may be one or a plurality of battery cell included in the battery module, and those skilled in the art may select a specific quantity based on the application and capacity of the battery module.

### [Battery]

An embodiment of the present application provides a battery, including the battery cell provided in the above embodiments. FIG. 11 is a schematic diagram of a battery according to an embodiment of the present application. As shown in FIG. 11, a battery 5 may include a plurality of battery cells (not shown in the figure).

The battery cells 3 may directly constitute the battery 5, or may constitute a battery module and then a plurality of battery modules constitute the battery 5.

### [Electric apparatus]

An embodiment of the present application provides an electric apparatus, including the battery provided in the above embodiments.

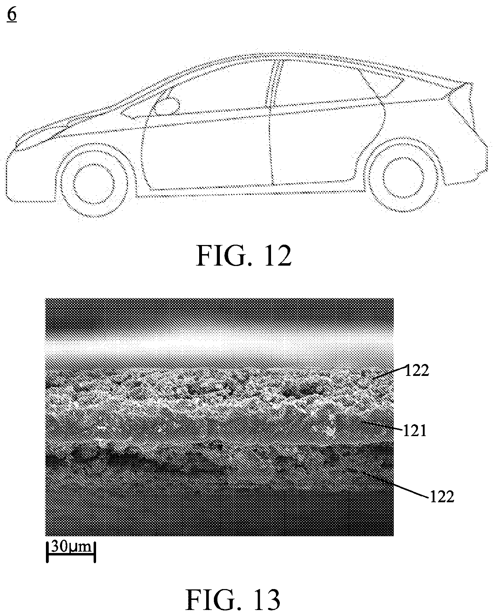

FIG. 12 is a schematic diagram of an electric apparatus according to an embodiment of the present application. As shown in FIG. 12, the present application provides an electric apparatus 6, including the battery provided in the above embodiments.

Optionally, the electric apparatus may also be an energy storage apparatus, a lighting apparatus, a spacecraft, and the like, and the embodiments of the present application include but are not limited thereto.

Embodiments of the present application are described below. The example described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

### [Examples]

### Example 1

The electrode piece in Example 1 has the structure as shown in FIG. 2.

In Example 1, the second insulating layer includes the thermoplastic polymer and the organic binder, where the material of the thermoplastic polymer is microcrystalline wax, and the dropping point of the microcrystalline wax is 80°C; and the organic binder is polyimide, and the thermal decomposition temperature is 600°C.

The thickness d2 of the second insulating layer is 30 µm, and the thickness d1 of the first insulating layer is 860 nm. In the second insulating layer, the mass ratio A:B of the thermoplastic polymer to the organic binder is 60:40.

The power of the laser processing tool is 200 W, the frequency is 200 kHz, and the feed speed is 20 m/min.

### Examples 2 to 5

Examples 2-5 differ from Example 1 in the type of the organic binder.

Correspondingly, the thermal decomposition temperature of the organic binder is different.

### Examples 6 to 9

Examples 6 to 9 differ from Example 1 in the thickness of the second insulating layer.

Correspondingly, as the thickness of the second insulating layer changes, the thickness of the first insulating layer and the resistance of the end face also change.

### Examples 10 to 12

Examples 10 to 12 differ from Example 1 in the material of the thermoplastic polymer.

Correspondingly, the dropping point of the thermoplastic polymer is different. PTFE is polytetrafluoroethylene.

### Examples 13 to 14

Examples 13 to 14 differ from Example 1 in that the mass ratio of the thermoplastic polymer to the organic binder is different in the second insulating layer.

### Examples 15 to 16

Examples 15 to 16 differ from Example 1 in that boehmite is further included in the second insulating layer.

In the second insulating layer, the mass ratio of the thermoplastic polymer to the boehmite to the binder is 30:30:40.

In Examples 15 to 16, the volume particle size distributions Dv50 of boehmite are different.

### Comparative example 1

Comparative example 1 differs from Example 1 in that the material of the second insulating layer does not include the thermoplastic polymer, and the material in the second insulating layer includes boehmite.

### Comparative example 2

Comparative example 2 differs from Example 1 in that the organic binder in the second insulating layer is polyvinylidene fluoride PVDF.

**Table 1: Parameters in Examples and Parameters in Comparative Examples**

| | dl/nm | R/Ω | Second Insulating Layer | | | | | | | |
|---|---|---|---|---|---|---|---|---|---|---|
| | | | Insulating Inorganic Material | | d2/µm | Thermoplastic Polymer | | Organic Binder | | A:B |
| | | | Material | Dv50/µm | | Material | Dropping Point/°C | Material | Thermal Decomposition Temperature T/°C | |
| Example 1 | 860 | ∞ | / | / | 30 | Microcrystalline wax | 80 | Polyimide | 600 | 60:40 |
| Example 2 | 860 | ∞ | / | / | 30 | Microcrystalline wax | 80 | Epoxy resin | 400 | 60:40 |
| Example 3 | 860 | ∞ | / | / | 30 | Microcrystalline wax | 80 | Modified phenolic aldehyde | 500 | 60:40 |
| Example 4 | 860 | ∞ | / | / | 30 | Microcrystalline wax | 80 | Organosilicon | 430 | 60:40 |
| Example 5 | 860 | ∞ | / | / | 30 | Microcrystalline wax | 80 | β-Cyclodextrin modified by N,N-diisopropylethylen ediamine | 400 | 60:40 |
| Example 6 | 200 | 100 | / | / | 20 | Microcrystalline wax | 80 | Polyimide | 600 | 60:40 |
| Example 7 | 550 | 2000 | / | / | 25 | Microcrystalline wax | 80 | Polyimide | 600 | 60:40 |
| Example 8 | 1300 | ∞ | / | / | 40 | Microcrystalline wax | 80 | Polyimide | 600 | 60:40 |
| Example 9 | 2000 | ∞ | / | / | 50 | Microcrystalline wax | 80 | Polyimide | 600 | 60:40 |
| Example 10 | 860 | ∞ | / | / | 30 | Polyamide | 200 | Polyimide | 600 | 60:40 |
| Example 11 | 860 | ∞ | / | / | 30 | Polypropylene | 150 | Polyimide | 600 | 60:40 |
| Example 12 | 860 | ∞ | / | / | 30 | PTFE | 110 | Polyimide | 600 | 60:40 |
| Example 13 | 860 | ∞ | / | / | 30 | Microcrystalline wax | 80 | Polyimide | 600 | 70:30 |
| Example 14 | 860 | ∞ | / | / | 30 | Microcrystalline wax | 80 | Polyimide | 600 | 80:20 |
| Example 15 | 860 | ∞ | Boehmite | 1 | 30 | Microcrystalline wax | 80 | Polyimide | 600 | 30:40 |
| Example 16 | 860 | ∞ | Boehmite | 1.5 | 30 | Microcrystalline wax | 80 | Polyimide | 600 | 30:40 |
| Comparative Example 1 | / | / | Boehmite | / | 30 | / | / | PVDF | 316 | 80:20 |
| Comparative Example 2 | 860 | ∞ | / | / | 30 | Microcrystalline wax | 80 | PVDF | 316 | 60:40 |

**Table 2: Experimental Results of Comparative Examples and Examples**

| | Whether or not the second insulating layer falls | Whether or not fire occurs when the fully charged anode contacts the second insulating layer | Whether or not the thermoplastic polymer is at the second insulating layer | Whether or not fire occurs when the fully charged anode is contacted | End face with polymer or not |
|---|---|---|---|---|---|
| Example 1 | Non-Falling | Non-fire | Yes | Non-fire | Yes |
| Example 2 | Non-Falling | Non-fire | Yes | Non-fire | Yes |
| Example 3 | Non-Falling | Non-fire | Yes | Non-fire | Yes |
| Example 4 | Non-Falling | Non-fire | Yes | Non-fire | Yes |
| Example 5 | Non-Falling | Non-fire | Yes | Non-fire | Yes |
| Example 6 | Non-Falling | Non-fire | Yes | Non-fire | Yes |
| Example 7 | Non-Falling | Non-fire | Yes | Non-fire | Yes |
| Example 8 | Non-Falling | Non-fire | Yes | Non-fire | Yes |
| Example 9 | Non-Falling | Non-fire | Yes | Non-fire | Yes |
| Example 10 | Non-Falling | Non-fire | Yes | Non-fire | Yes |
| Example 11 | Non-Falling | Non-fire | Yes | Non-fire | Yes |
| Example 12 | Non-Falling | Non-fire | Yes | Non-fire | Yes |
| Example 13 | Non-Falling | Non-fire | Yes | Non-fire | Yes |
| Example 14 | Non-Falling | Non-fire | Yes | Non-fire | Yes |
| Example 15 | Non-Falling | Non-fire | Yes | Non-fire | Yes |
| Example 16 | Non-Falling | Non-fire | Yes | Non-fire | Yes |
| Comparative Example 1 | Falling | Fire | None | Fire | None |
| Comparative Example 2 | Falling | Fire | Yes | Non-fire | Yes |

### [Preparation of a battery cell]

### (1) Preparing a slurry of a second insulating coating

The thermoplastic polymer and the organic binder are mixed in a specific ratio, followed by solvent addition and uniform stirring. The slurry viscosity is about 3000 mPa·s. The organic binder is polyvinylidene fluoride PVDF and the solvent is nitrogen methylpyrrolidone. Specific thermoplastic polymer and organic binder, and the ratio of the thermoplastic polymer to the organic binder can be found in Table 1.

### (2) Coating and drying

The active substance layer is prepared when the aluminum foil is coated with a positive electrode active slurry, where the positive electrode active slurry is LiNi_{0.8}Co_{0.1}Mn_{0.1}O₂(NCM811). The aluminum foil is coated with the insulating coating slurry described above with a coating width of 3 mm. After drying in an oven at the drying temperature of 100°C, the thickness of the second insulating layer after drying is shown in Table 1. The thickness of the second insulating layer herein refers to the thickness of the second insulating layer on a single side of the current collector.

### (3) Laser die-cutting

The above product is die-cut by laser, with specific process parameters listed in Table 1.

### (4) Battery cell preparation

The positive electrode piece is combined with other components required for the battery, such as the negative electrode piece, the separator, and the electrolyte solution, to assemble a lithium-ion battery cell.

### [Measurement of the thermal decomposition temperature]

The thermal decomposition temperature can be measured by using a differential thermal analysis method, a thermal weight loss method, a thermo-mechanical curve analysis method, or the like.

As an example, a differential scanning calorimetry may be used for the measurement. For example, a sample is placed in a sample pan and the thermal decomposition temperature is measured according to corresponding operation method.

### [Confirmation of the first insulating layer]

The end face is observed by using the scanning electron microscope to see whether or not the first insulating layer is at the end face.

### [Confirmation of the second insulating layer]

The scanning electron microscope is used to observe whether or not the thermoplastic polymer is at the second insulating layer and in the area of the second insulating layer near the cutting line.

### [Test for whether or not the second insulating layer falls]

Whether or not the second insulating layer falls is observed by using a scanning electron microscope.

### [Test for contacting the fully charged anode]

The end face after laser die-cutting is used to contact the fully charged anode, and whether or not the fire occurs is observed.

### [Test of the second insulating layer contacting the fully charged anode]

The area of the second insulating layer close to the cutting line contacts the fully charged anode, and whether or not the fire occurs is observed.

### [Test of the resistance]

The resistance of the end face can be measured by using an ohmmeter.

For example, one end of the ohmmeter is connected to the tab of the positive electrode piece (specifically, a part of the tab not coated with the second insulating layer) in the embodiment, and the other end is connected to the tab of the negative electrode piece which contacts the end face of the positive electrode piece.

### [Confirmation of the dropping point of the thermoplastic polymer]

The dropping point of the thermoplastic polymer can be determined with reference to GB/T8026-2014. For example, a cooled temperature sensor is vertically immersed in the sample so that the sample adheres to the temperature sensor which is then placed in a test tube and heated at the specific heating rate to start sample melting. Until the first drop of the sample on the sensor is dropped, the temperature of the sensor at this time is the dropping point of the sample.

For another example, the dropping point of the thermoplastic polymer may be determined according to the specific thermoplastic polymer after the specific type of the thermoplastic polymer is determined. As an example, for the crystalline thermoplastic polymer, the dropping point refers to the melting point of the crystalline thermoplastic polymer. For the amorphous thermoplastic polymer, the dropping point refers to a glass transition temperature of the amorphous thermoplastic polymer.

### [Mass ratio of the thermoplastic polymer to the binder]

The mass ratio of the thermoplastic polymer to the binder can be obtained according to the mass of the thermoplastic polymer and the mass of the binder which are added during the preparation process.

### [Test of the particle diameter of the insulating inorganic material]

The volume particle size distribution Dv50 can be determined by using a particle size analyzer-laser diffraction method, and specifically, by using a laser diffraction scattering particle size analyzer according to the manufacturer's instructions with reference to the standard GB/T19077-2016. For example, before a slurry is prepared for the second insulating layer, an appropriate amount of the insulating inorganic material (e.g., boehmite) is taken, and the average volume particle size of the material is measured by using a Malvern2000 (MasterSizer 2000) laser particle size analyzer. An appropriate amount of the to-be-tested sample (the sample concentration needs to be 8-12% light blocking) is taken, 20 mL of deionized water is added, and ultrasonic treatment is performed for 5 min (53 kHz/120 W) to ensure complete dispersion. Subsequently, the sample is analyzed with reference to GB/T19077-2016/ISO 13320:2009 standard.

For another example, the electrode piece may be tested by using the scanning electron microscope to obtain an image of the area of the second insulating layer of the electrode piece. The particle size of the insulating inorganic material is measured according to the image.

FIG. 13 is a SEM diagram of an end face on which a first insulating layer is arranged according to an embodiment of the present application. Referring to FIG. 13, the first insulating layer 121 is arranged at the end face of the electrode piece.

As shown in combination with Examples 1 to 16 and Comparative example 1, the first insulating layer is arranged at the end face of the electrode piece, so that no fire occurs after the end face of the electrode piece contacts the fully charged anode. Therefore, the reliability of the battery cell can be improved in the technical solution of the embodiment of the present application.

As shown in combination with Examples 1 to 16 and Comparative example 2, by setting the thermal decomposition temperature of the organic binder to 400°C or more, the risk that the second insulating layer falls can be reduced, so that no fire occurs when the second insulating layer contacts the electrode with the opposite polarity.

As shown in Examples 1 to 5, the technical solutions of the present application can be applied to various organic binders.

As shown in Examples 6 to 9, by properly setting the thickness of the second insulating layer, a suitable thickness of the first insulating layer can be obtained.

As shown in Examples 10 to 12, the thermoplastic polymer in the second insulating layer may be a variety of materials.

As shown in Examples 13 to 14, the thermoplastic polymer and the organic binder in the second insulating layer can be used at different mass ratios.

As shown in Examples 15 to 16, in the technical solutions of the present application, the insulating inorganic material may be added to the slurry of the second insulating layer, and the volume particle size distribution Dv50 of the insulating inorganic material is 1 µm to 1.5 µm. No fire occurs when the second insulating layer contacts the fully charged anode, so that it can be said that the second insulating layer does not shrink.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. **In** addition, various modifications that can be conceived by those skilled in the art may be made to the implementations without departing from the subject matter of the present application, and other implementations constructed by combining some of the constituent elements in the implementations are also included in the scope of the present application.

## Claims

1. An electrode piece, **characterized by** comprising a current collector, an active substance layer, a first insulating layer and a second insulating layer, wherein
the current collector comprises a main body part and a tab, the tab extends from a first end of the main body part, the first end is an end of the main body part in a first direction, the main body part comprises a coating area and a transition area, and the transition area is arranged between the coating area and the tab;
the active substance layer is arranged on a surface of the coating area;
the first insulating layer is arranged on an end face of the main body part at the first end; and
at least a part of the second insulating layer is arranged on a surface of the transition area, the second insulating layer comprises a thermoplastic polymer and an organic binder, and the organic binder has a thermal decomposition temperature T≥400°C.

2. The electrode piece according to claim 1, wherein the organic binder comprises at least one of a resin binder, a rubber binder, and a composite binder.

3. The electrode piece according to claim 2, wherein the resin binder comprises at least one of epoxy resin, polyimide, and another nitrogen-containing heterocyclic binder, and/or the rubber binder comprises organosilicon rubber, and/or the composite organic binder comprises at least one of phenolic aldehyde and modified phenolic aldehyde.

4. The electrode piece according to any one of claims 1 to 3, wherein a dropping point of the thermoplastic polymer is 80°C to 200°C.

5. The electrode piece according to any one of claims 1 to 4, wherein the thermoplastic polymer comprises at least one of a crystalline thermoplastic polymer and an amorphous thermoplastic polymer, the crystalline thermoplastic polymer comprises at least one of polyethylene, polypropylene, and polyamide, and the amorphous thermoplastic polymer comprises at least one of microcrystalline wax, polystyrene, and polymethyl methacrylate.

6. The electrode piece according to any one of claims 1 to 5, wherein the second insulating layer further comprises an insulating inorganic material.

7. The electrode piece according to claim 6, wherein a volume particle diameter distribution Dv50 of the insulating inorganic material is 1 µm to 1.5 µm.

8. The electrode piece according to claim 6 or 7, wherein the insulating inorganic material comprises boehmite.

9. The electrode piece according to any one of claims 1 to 8, wherein a resistance R of the end face on which the first insulating layer is arranged satisfies R≥100 Ω.

10. The electrode piece according to any one of claims 1 to 9, wherein in the second insulating layer, the mass ratio A:B of the thermoplastic polymer to the organic binder is 60:40 to 80:20.

11. The electrode piece according to any one of claims 1 to 10, wherein the thickness d1 of the first insulating layer is 200 nm to 2000 nm.

12. The electrode piece according to any one of claims 1 to 11, wherein the thickness d2 of the second insulating layer is 20 µm to 50 µm.

13. The electrode piece according to any one of claims 1 to 12, wherein the second insulating layer comprises a first part and a second part, the first part is arranged on the surface of the transition area, and the second part extends from the first part in the first direction and is arranged on a part of a surface of the tab.

14. The electrode piece according to claim 13, wherein end faces of both ends of the area of the tab in which the second part is arranged are arranged with the first insulating layer in a second direction, and the second direction is different from the first direction.

15. The electrode piece according to any one of claims 1 to 14, wherein the material of the first insulating layer is the same as the material of the thermoplastic polymer in the second insulating layer.

16. The electrode piece according to any one of claims 1 to 15, wherein the thermoplastic polymer in the first insulating layer is in the form of a film, and the thermoplastic polymer in the second insulating layer comprises a thermoplastic polymer in the form of a film and a thermoplastic polymer in the form of a particle.

17. The electrode piece according to any one of claims 1 to 16, wherein the current collector comprises aluminum foil.

18. The electrode piece according to any one of claims 1 to 17, wherein the first insulating layer is further arranged on an end face of the main body part at a second end, and the second end is opposite to the first end in the first direction.

19. A method for preparing an electrode piece, **characterized by** comprising:
providing a current collector;
coating a first area of the current collector with an active substance to form an active substance layer;
coating a second area of the current collector with an insulating slurry to form a second insulating layer, wherein the insulating slurry comprises a thermoplastic polymer and an organic binder, and the organic binder has a thermal decomposition temperature T≥400°C; and
cutting the current collector arranged with the second insulating layer along a cutting line, wherein at least a part of the cutting line is arranged in the second area.

20. The method according to claim 19, wherein the organic binder comprises at least one of a resin binder, a rubber binder, and a composite binder.

21. The method according to claim 19 or 20, wherein a dropping point of the thermoplastic polymer is 80°C to 200°C.

22. The method according to any one of claims 19 to 21, wherein the material of the thermoplastic polymer comprises at least one of a crystalline thermoplastic polymer and an amorphous thermoplastic polymer, the crystalline thermoplastic polymer comprises at least one of polyethylene, polypropylene, and polyamide, and the amorphous thermoplastic polymer comprises at least one of microcrystalline wax, polystyrene, and polymethyl methacrylate.

23. The method according to any one of claims 19 to 22, wherein the insulating slurry further comprises an insulating inorganic material.

24. The method according to any one of claims 19 to 23, wherein in the insulating slurry, the mass ratio A:B of the thermoplastic polymer to the organic binder is 60:40 to 80:20.

25. The method according to any one of claims 19 to 24, wherein the thickness d2 of the second insulating layer is 20 µm to 50 µm.

26. The method according to any one of claims 19 to 25, wherein the cutting the current collector arranged with the second insulating layer along a cutting line further comprises:
controlling a laser processing tool to cut the current collector arranged with the second insulating layer along the cutting line.

27. A battery cell, **characterized by** comprising the electrode piece according to any one of claims 1 to 18 and/or the electrode piece prepared by using the method according to any one of claims 19 to 26.

28. A battery, **characterized by** comprising the battery cell according to claim 27.

29. An electric apparatus, **characterized by** comprising the battery according to claim 28.
